# EUROPEAN PATENT SPECIFICATION

(11) **EP 4 385 772 B1**
(45) Date of publication and mention of the grant of the patent: **05.11.2025**
(21) Application number: 22213748.1
(22) Date of filing: 15.12.2022
(51) Int. Cl.: B60H 1/00, B60K 35/00, B60R 1/00

(54) **SYSTEM AND METHOD FOR CONTROLLING HVAC SYSTEM OF VEHICLE**
SYSTEM UND VERFAHREN ZUR STEUERUNG DES HVAC-SYSTEMS EINES FAHRZEUGS
SYSTÈME ET PROCÉDÉ DE COMMANDE DE SYSTÈME HVAC DE VÉHICULE

(43) Date of publication of application: 19.06.2024
(73) Proprietor: Robert Bosch GmbH, 70442 Stuttgart (DE)
(72) Inventor: Tanyildiz, Baris, 574036 Singapore (SG); Cola, Fabrizio, 534635 Singapore (SG); Ooi, Ching Sheng, 573943 Singapore (SG)

(56) References cited:
- EP-A1- 3 326 850
- EP-A1- 3 335 919
- DE-A1- 102015 218 205
- DE-U1- 202019 101 874

## Description

### TECHNICAL FIELD

This invention relates to a method and a system for controlling a heating, ventilation and air conditioning (HVAC) system in a cabin of a vehicle.

### BACKGROUND

Heating, ventilation and air conditioning (HVAC) system is the second largest on-board consumer of battery energy in electric vehicles such as light commercial transportation, vans or buses. For example, energy consumption per kilometer can grow up to 56% in electric buses due to the HVAC system usage. A known HVAC system is disclosed by EP 3 326 850 A1.

With limited specific reserve power on-board batteries, energy consumption due to HVAC can reduce the overall mileage range by 40% to 60% depending on running season (cooling or heating). On the other hand, due to almost half of the battery power goes to HVAC operations in high/low ambient temperature conditions, electric vehicles will have less mileage range than internal combustion engine (ICE) based transportation vehicles. This leads to a need for a larger battery which stores more energy and provides a longer battery life, therefore increasing total operating costs, to accomplish target mileage or less frequent charging in central charge stations.

The mileage range can be increased by utilizing the energy saved through optimizing the HVAC system.

In an implementation, a vehicle has a sensor system disposed adjacent to a headrest portion of a seat within a passenger compartment of the vehicle. The sensor system includes at least one of an air velocity sensor, an air temperature sensor, a radiant heat flux sensor, a heat flux sensor, or a humidity sensor. The sensor system provides data related to the air velocity, the air temperature, the radiant heat flux, the heat flux, or the relative humidity, enabling a climate controller to accurately calculate a current Equivalent Homogenous Temperature (EHT) of a passenger seated in the seat. The climate controller may then control a climate system of the vehicle based on the calculated EHT to provide a desired EHT.

However, the sensor system requires multiple sampling and sensor installation around the cabin.

A solution is needed to provide an improved method for controlling/optimizing the HVAC system in electric vehicles.

### SUMMARY

This invention was conceptualized to assist in controlling/optimizing the HVAC system in vehicles, e.g., electric vehicles. The data of desired temperature, desired ventilation rate (desired air speed, desired air volume), desired ventilation mode (recirculation and fresh air intake) is obtained for controlling/optimizing the HVAC system in the vehicles.

A technical solution is provided in the form of a method and a system for controlling/optimizing the HVAC system in electric vehicles.

The system for controlling a HVAC system in a cabin of a vehicle comprising: a counting system configured to collect headcount data of passengers in the cabin; a camera configured to capture a plurality of images of an inside of the cabin at different times; a processor connected to the counting system and the camera, wherein the processor is configured to: obtain data of headcount of passengers in the cabin based on the captured images; validate the collected headcount data with the obtained data of headcount; and obtain thermal loads based on the collected headcount data, obtained data of location and density of the passengers, calculated humidity and heat generation, obtained solar thermal distribution along the cabin, collected HVAC information and collected location and time based weather forecast data.

The method for controlling a HVAC system in a cabin of a vehicle comprising: collecting headcount data of passengers in the cabin by a counting system; capturing a plurality of images of an inside of the cabin at different times by a camera; obtaining data of headcount of passengers in the cabin based on the captured images by a processor;
validating the collected headcount data with the obtained data of headcount by the processor; obtaining thermal loads based on the collected headcount data, obtained data of location and density of the passengers, calculated humidity and heat generation, obtained solar thermal distribution along the cabin, collected HVAC information and collected location and time based weather forecast data by the processor.

The dependent claims define some examples associated with the system and method, respectively.

The manual / semi-auto operation of the HVAC system is configured to eliminate overcooling or overheating, and overventilation, reduce total interaction of driver on HVAC controls, maintain overall thermal comfort of the passengers and enhance micro-climate management.

### BRIEF DESCRIPTION OF THE DRAWINGS

The present invention will be better understood with reference to the detailed description when considered in conjunction with the non-limiting examples and the accompanying drawings, in which:
- FIG.1 shows a schematic illustration of a vehicle having a cabin and a HVAC system.
- FIG.2 shows a schematic illustration of a system for controlling a HVAC system in a cabin of a vehicle.
- FIG.3A and FIG.3B respectively shows a side view and a top view of a system for controlling a HVAC system in a cabin of a vehicle, where the cabin is fully loaded with passengers.
- FIG.3C shows an infrared image captured by an infrared camera combined with an image captured by a camera of the inside of a first part of the cabin of FIG.3A along the x-z plane.
- FIG.3D shows an infrared image combined with an image of the inside of a second part of the cabin of FIG.3A along the x-z plane.
- FIG. 4A and FIG.4B respectively shows a side view and a top view of a system for controlling a HVAC system in a cabin of a vehicle, where the cabin is partially loaded with passengers.
- FIG.4C shows an infrared image combined with an image of the inside of a first part of the cabin of FIG.4A along the x-z plane.
- FIG.4D shows an infrared image combined with an image of the inside of a second part of the cabin of FIG.4A along the x-z plane.
- FIG.5 is a flow chart depicting the method for controlling the HVAC system in a cabin of a vehicle.

### DETAILED DESCRIPTION

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and structural, and logical changes may be made without departing from the scope of the invention as defined by the claims. The various embodiments are not necessarily mutually exclusive, as some embodiments can be combined with one or more other embodiments to form new embodiments.

Embodiments described in the context of one of the systems or methods are analogously valid for the other systems or methods.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

As used herein, the term "data" may be understood to include information in any suitable analog or digital form, for example, provided as a file, a portion of a file, a set of files, a signal or stream, a portion of a signal or stream, a set of signals or streams, and the like. The term data, however, is not limited to the aforementioned examples and may take various forms and represent any information as understood in the art.

As used herein, the term "connected" can refer to a wired or wireless connection. Preferably, the connection between the at least one sensor and the graphic processing unit and/or the connection between the graphic processing unit and the display unit is a wired connection.

According to an aspect of the invention, a system 100 is provided for controlling a heating, ventilation and air conditioning (HVAC) system 110 in a cabin 20 of a vehicle 10, e.g., an electric vehicle 10.

Many factors influence the energy requirements of a HVAC system 110 in a vehicle 10, such as headcount and location of the passengers 30, solar radiation direction, solar radiation temperature, temperature and humidity of the external environment outside the cabin 20, etc.

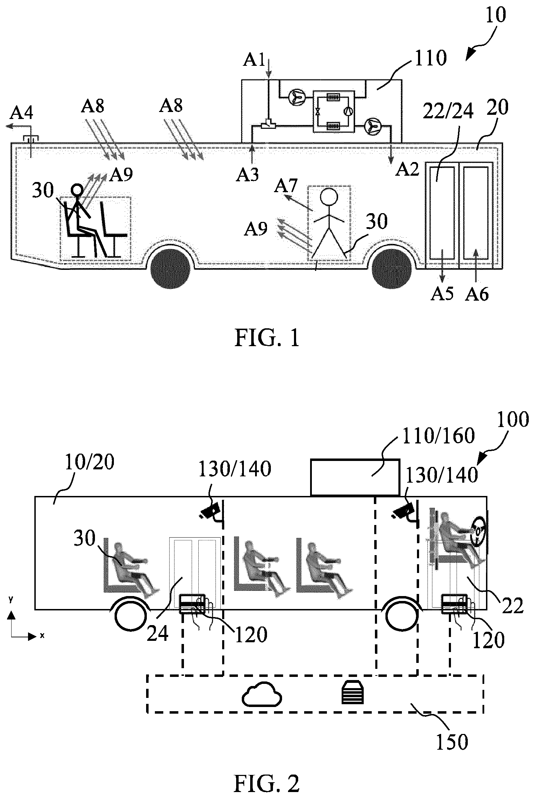

FIG. 1 shows a schematic illustration of a vehicle 10 having a cabin 20 and a HVAC system 110. There is an air and heat exchange among the external environment outside the cabin 20, the passengers 30 in the cabin 20, the cabin 20 and the HVAC system 110. Fresh air flows from external environment into the HVAC system 110 as indicated by an arrow A1, supply air flows from the HVAC system 110 to the cabin 20 as indicated by an arrow A2, recirculation air flows from the cabin 20 to the HVAC system 110 as indicated by an arrow A3, exit air flows from the cabin 20 to the external environment as indicated by an arrow A4. There is also air exchange between the cabin 20 and the external environment through opening the doors 22/24 of the vehicle 10 as indicated by arrows A5 and A6. Passengers 30 release vapor into the cabin 20 of the vehicle 10 as indicated by an arrow A7. Heat exchanges between the HVAC system 110 and the cabin 20 when the supply air flows from the HVAC system 110 to the cabin 20, and recirculation air flows from the cabin 20 to the HVAC system 110. Heat exchanges between the external environment and the cabin 20 when the fresh air flows from the environment to the HVAC system 110 and exit air flows from the cabin 20 to the external environment. Heat is released to the cabin 20 of the vehicle 10 through solar radiation as indicated by arrows A8. Passengers 30 also releases heat to the cabin 20 of the vehicle 10 as indicated by arrows A9.

FIG.2 shows a schematic illustration of a system 100 for controlling a HVAC system 110 in a cabin 20 of a vehicle 10.

As shown in FIG.2, the system 100 comprises a counting system 120, a camera 130 and a processor 150. The processor 150 is connected to the counting system 120 and the camera 130. The processor 150 can comprise a local server and/or a cloud server.

The system 100 can also comprise a HVAC system 110, an infrared camera 140 and a HVAC controller 160. The processor 150 can be connected to the HVAC system 110, the infrared camera 140 and the HVAC controller 160.

The counting system 120 is configured to collect headcount data of the passengers 30 in the cabin 20. The total headcount of the passengers 30 in the cabin 20 of the vehicle 10 is changing with the time. In some embodiments, the counting system 120 can be a tap in/out system, a light barrier system, a smart phone signal counting system which counts the smartphone signals (for example Wifi or Bluetooth signals), a weighing system, such as a scale, in the floor, or a ticket check system (local paper ticket or online ticket). Based on the counting system 120 as a tap in/out system 120 for example, when a passenger 30 taps on the tap in/out system 120 when the passenger 30 enters the cabin 20 of the vehicle 10 through an entrance door 22 of the vehicle 10, the tap in/out system 120 can add one to the total headcount of the passengers 30 in the cabin 20. When a passenger 30 taps on the tap in/out system 120 when the passenger 30 exits the cabin 20 through an exit door 24 of the vehicle 10, the tap in/out system 120 can subtract one from the total headcount of the passengers 30 in the cabin 20. Based on the counting system 120 as a light barrier system 120 for example, which is mounted next to the door(s) 22/24 of the vehicle, when a passenger 30 passes between the transmitter and receiver of the light barrier system 120, i.e., when the passenger 30 enters the cabin 20 of the vehicle 10 through an entrance door 22 of the vehicle 10, the light barrier system 120 can add one to the total headcount of the passengers 30 in the cabin 20. When a passenger 30 passes between the transmitter and receiver of the light barrier system 120, i.e., when the passenger 30 exits the cabin 20 through an exit door 24 of the vehicle 10, the light barrier system 120 can subtract one from the total headcount of the passengers 30 in the cabin 20. Based on the counting system 120 as a smartphone signal counting system 120 which counts the smartphone signals (for example Wifi or Bluetooth signals) for example, when a passenger 30 enters the vehicle 10, the smartphone signal counting system 120 can detect the smartphone signals (for example Wifi or Bluetooth signals) from the passenger 30 who enters the vehicle 10 and add one to the total headcount of the passengers 30 in the cabin 20. When a passenger 30 exits the vehicle 10, the smartphone signal counting system 120 is no longer able to detect the smartphone signals (for example Wifi or Bluetooth signals) from the passenger 30 who exits the vehicle 10 and the smartphone signal counting system 120 can subtract one from the total headcount of the passengers 30 in the cabin 20. Based on the counting system 120 as a weighing system 120, such as a scale, in the floor for example, which is mounted next to the doors 22/24 of the vehicle, when a passenger 30 steps on the weighing system 120 when the passenger enters the cabin 20 of the vehicle 10 through an entrance door 22 of the vehicle 10, the weighing system 120 can add one to the total headcount of the passengers 30 in the cabin 20. When a passenger 30 steps on the weighing system 120 when the passenger 30 exits the cabin 20 through an exit door 24 of the vehicle 10, the weighing system 120 can subtract one from the total headcount of the passengers 30 in the cabin 20. Based on the counting system 120 as a ticket check system 120 for example, when a local paper ticket or an online ticket of a passenger 30 is checked by the ticket check system 120 when the passenger 30 enters the cabin 20 of the vehicle 10 through an entrance door 22 of the vehicle 10, the ticket check system 120 can add one to the total headcount of the passengers 30 in the cabin 20. When a local paper ticket or an online ticket of a passenger 30 is checked by the ticket check system 120 when the passenger 30 exits the cabin 20 through an exit door 24 of the vehicle 10, the ticket check system 120 can subtract one from the total headcount of the passengers 30 in the cabin 20.

The camera 130 is configured to capture a plurality of images of an inside of the cabin 20 at different times. The plurality of images can include images from a video or videos captured by the camera 130. The processor 150 is configured to obtain data of headcount of passengers 30 in the cabin 20 based on the captured images. Computer vision may be used to obtain the data of the headcount of the passengers 30 based on the capture images. The processor 150 is configured to validate the headcount data of the passengers 30 collected by the counting system 120 with the obtained data of headcount of the passenger 30.

The processor 150 can be used to calculate humidity and heat generation from the passengers 30 based on the collected headcount data of the passengers 30 and standard values from American Society of Heating, Refrigerating and Air-Conditioning Engineers (ASHRAE) standards. According to the ASHRAE standards, heat generation per person is around 100 watts, and water vapor generation is 70g/h when the passenger is seated and 90g/h when the passenger is standing.

The processor 150 can be used to obtain infiltration rates based on duration of opening of the doors 22/24 of the vehicle 10. The obtained infiltration rates can be used for calculating the humidity and heat generation.

The infrared camera 140 can be configured to detect thermal energy along the cabin 20 and convert the thermal energy into an electrical signal, which is then processed to produce an infrared image. The infrared camera 140 can be configured to capture a plurality of infrared images of the inside of the cabin 20 at different times. The processor 150 can be used to obtain solar radiation direction and solar thermal distribution along the cabin 20 based on the captured infrared images. The solar radiation direction and solar thermal distribution along the cabin 20 is changing with time.

The processor 150 can obtain the data of location and density of the passengers 30 in the cabin 20 based on the captured images of the inside of the cabin 20 at different times. The location and density of the passengers 30 in the cabin 20 is changing with time. In addition, the data of the density of the passengers 30 can be obtained by the processor 150 based on the collected headcount data of the passengers 30 and the obtained data of location of the passengers 30. The passenger 30 can comprise seating passengers 30 and/or standing passengers 30.

The processor 150 is configured to obtain thermal loads, the amount of heat energy required to add to or remove from the cabin 20 in order to maintain desired in-cabin temperature. The thermal load, the amount of heat energy required to add to or remove from the cabin 20 in order to maintain desired in-cabin temperature, is changing with time. The thermal loads are obtained based on the collected headcount data of the passengers 30, obtained data of location and density of the passengers 30, the calculated humidity and heat generation, the obtained solar radiation direction and solar thermal distribution along the cabin 20, collected HVAC information and collected location and time based weather forecast data by the processor.

The HVAC information can be collected from the HVAC system. The HVAC information can comprise in-cabin temperature, humidity and ventilation setting.

The location and time based weather forecast data can comprise forecast data of location and time based solar radiation, temperature, humidity of the external environment outside the cabin 20.

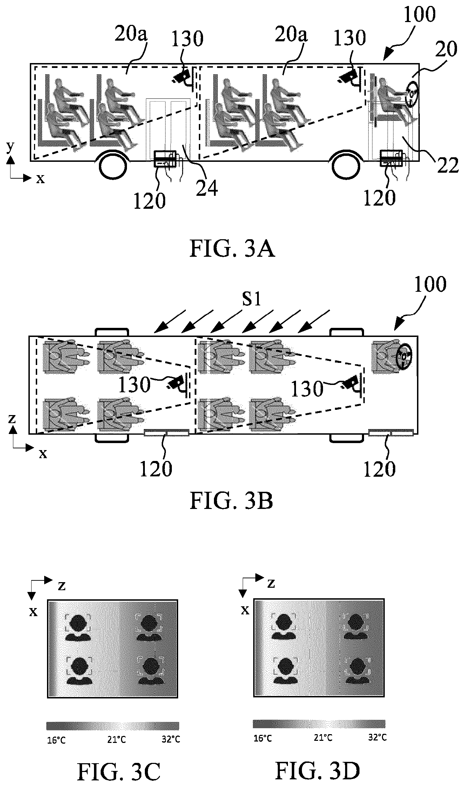

FIG. 3A and FIG.3B respectively shows a side view and a top view of a system 100 for controlling a HVAC system 110 in a cabin 20 of a vehicle 10, where the cabin 20 is fully loaded with passengers 30, according to some embodiments. The solar radiation direction is indicated as arrows S1.

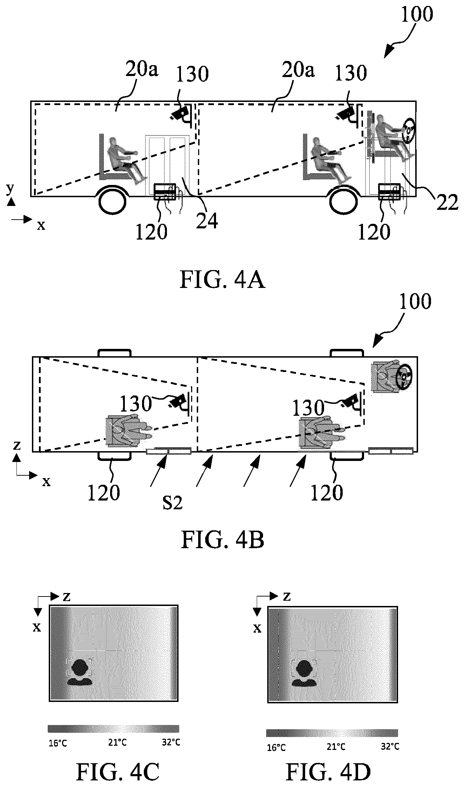

FIG. 4A and FIG.4B respectively shows a side view and a top view of a system 100 for controlling a HVAC system 110 in a cabin 20 of a vehicle 10, where the cabin 20 is partially loaded with passengers 30, according to some embodiments. The solar radiation direction is indicated as arrows S2.

As shown in FIGs.3A-3B and 4A-4B, the system 100 comprises a HVAC system 110 (not shown), a counting system 120, a camera 130, an infrared camera 140 (not shown) and a processor 150 (not shown).

The counting system 120 is used to collect headcount data of passengers 30 in the cabin 20.

The camera 130 is used to capture a plurality of images of an inside of the cabin 20 at different times. The infrared camera 140 is used to capture a plurality of infrared images of the inside of the cabin 20 at different times.

FIG.3C shows an infrared image of the inside of a first part 20a of the cabin 20 of FIG.3A along the x-z plane captured by an infrared camera 140 combined with an image of the inside of the first part 20a of the cabin 20 of FIG. 3A along the x-z plane captured by the camera 130 (with only the passengers 30 shown in the image and with all background items such as seats removed from the image using computer vision). FIG.3D shows an infrared image of the inside of a second part 20b of the cabin 20 of FIG.3A along the x-z plane captured by an infrared camera 140 combined with an image of the inside of the second part 20b of the cabin 20 of FIG. 3A along the x-z plane captured by the camera 130 (with only the passengers 30 shown in the image and with all background items such as seats removed from the image using computer vision).

FIG.4C shows an infrared image of the inside of a first part 20a of the cabin 20 of FIG.4A along the x-z plane captured by an infrared camera 140 combined with an image of the inside of the first part 20a of the cabin 20 of FIG. 4A along the x-z plane captured by the camera 130 (with only the passengers 30 shown in the image and with all background items such as seats removed from the image using computer vision). FIG.4D shows an infrared image of the inside of a second part 20b of the cabin 20 of FIG.4A along the x-z plane captured by an infrared camera 140 combined with an image of the inside of the second part 20b of the cabin 20 of FIG. 4A along the x-z plane captured by the camera 130 (with only the passengers 30 shown in the image and with all background items such as seats removed from the image using computer vision).

Data of headcount of passengers 30 in the cabin 20 is obtained based on the images of the inside of the cabin 20 captured by the camera 130. The headcount data of the passengers 30 collected by the counting system 120 is then validated with the obtained data of headcount of the passengers 30. humidity and heat generation from the passengers 30 can be calculated based on the collected headcount data of the passengers 30. data of location and density of passengers 30 in the cabin 20 can also be obtained based on the images of the inside of the cabin 20 captured by the camera 130.

The solar radiation direction and the solar thermal distribution along the cabin 20 can be obtained based on the infrared images of the inside of the cabin 20 captured by the infrared camera 140.

Infiltration rate can be obtained from duration of opening of doors 22/24 of the vehicle 10. The obtained infiltration rates can be used for calculating the humidity and heat generation.

Thermal loads are then obtained based on the collected headcount data of passengers 30, the obtained data of location and density of the passengers 30, the calculated humidity and heat generation, the obtained solar radiation direction and solar thermal distribution along the cabin 20, collected HVAC information and collected location and time based weather forecast data by the processor 150.

The HVAC information can be collected from the HVAC system 110. The HVAC information can comprise in-cabin temperature, humidity and ventilation setting.

The location and time based weather forecast data can comprise forecast data of location and time based solar radiation, temperature, humidity of the external environment outside the cabin 20.

The processor 150 can be used to obtain optimal temperatures based on the obtained thermal loads. The system 100 comprises a HVAC controller 160 configured to set the optimal temperatures for the HVAC system 110.

The processor 150 can be used to obtain optimal ventilation rates based on the obtained data of location and density of the passengers 30. The ventilation rate comprises air speed and air volume.

In-cabin CO₂ level can be calculated based on the collected headcount data of the passengers 30. The in-cabin CO₂ level can be used for determining a ratio of fresh air over the recirculation air.

Predicted Mean Vote (PMV) is a method used to calculate human comfort. The predicted mean vote (PMV) was developed as an empirical fit to the human sensation of thermal comfort. It predicts the average vote of a large group of people on the a seven-point thermal sensation scale where: +3 = hot, +2 = warm, +1 = slightly warm, 0 = neutral, -1 = slightly cool, -2 = cool, -3 = cold. PMV method according to ASHRAE's standard no.55 is used to estimate right delivery air temperature, ventilation rate (air speed and air volume) and ventilation mode (recirculation and fresh air intake) based on the current thermal load, in-cabin temperature, relative humidity, CO₂ level for controlling the HVAC system that makes overall passengers comfortable.

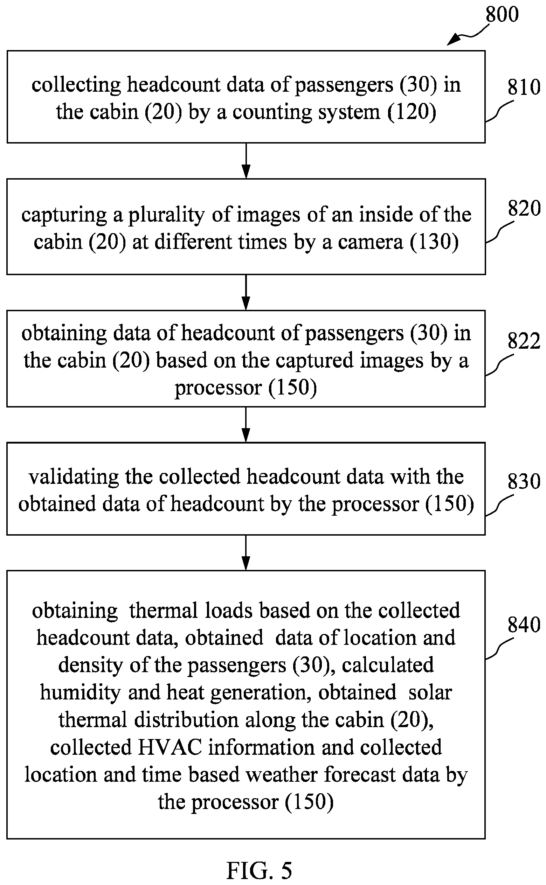

According to another aspect of the invention, a method 800 is provided for controlling the HVAC system 110 in a cabin 20 of a vehicle 10, e.g., an electric vehicle 10. FIG.5 is a flow chart depicting the method 800 for controlling the HVAC system 110 in a cabin 20 of a vehicle 10.

The method 800 comprises:
- a step 810 of collecting headcount data of passengers 30 in the cabin 20 by a counting system 120;
- a step 820 of capturing a plurality of images of an inside of the cabin 20 at different times by a camera 130;
- a step 822 of obtaining data of headcount of passengers 30 in the cabin 20 based on the captured images by a processor 150;
- a step 830 of validating the collected headcount data with the obtained data of headcount by the processor 150;
- a step 840 of obtaining thermal loads based on the collected headcount data, obtained data of location and density of the passengers 30, calculated humidity and heat generation, obtained solar thermal distribution along the cabin 20, collected HVAC information and collected location and time based weather forecast data by the processor 150.

In some embodiments, the method can further comprise:
- a step of 812 of calculating the humidity and heat generation from the passengers 30 based on the collected headcount data by the processor 150;
- a step of 824 of obtaining the data of location and density of passengers 30 in the cabin 20 based on the captured images by the processor 150;
- a step 850 of obtaining infiltration rates from duration of opening of doors 22/24 of the vehicle 10 by the processor 150, wherein the obtained infiltration rates are used for calculating the humidity and heat generation.
- a step 860 of capturing a plurality of infrared images of the inside of the cabin 20 at different times by an infrared camera 140;
- a step 862 of obtaining solar radiation direction and solar thermal distribution along the cabin 20 based on the captured infrared images by the processor 150.

In some embodiments, the method can further comprise:
- a step 842 of obtaining optimal temperatures based on the thermal loads; and
- a step 844 of setting, by a HVAC controller 160, the optimal temperatures for the HVAC system 110.

In some embodiments, the method can further comprise a step 826 of obtaining optimal ventilation rates based on the obtained data of location and density of the passengers 30 by the processor 150, wherein the ventilation rate comprises air speed and air volume.

Furthermore, one or more of the steps of a method described herein may be performed in parallel rather than sequentially.

The system and method in the present invention solves the problem of overcooling or overheating, e.g., when there are less passengers. It also maintains overall thermal comfort of the passenger along the transportation and enhances micro-climate management based on in-cabin passenger occupation.

In addition, the system and method in the present disclosure provides a more cost-effective way of controlling the HVAC system of a vehicle as it does not require sampling by multiple sensors installed around the cabin.

While the invention has been particularly shown and described with reference to specific embodiments, it should be understood by those skilled in the art that various changes in form and detail may be made therein without departing from the scope of the present invention as defined by the appended claims.

## Claims

1. A method (800) for controlling a HVAC system (110) in a cabin (20) of a vehicle (10) comprising:
a step (810) of collecting headcount data of passengers (30) in the cabin (20) by a counting system (120);
a step (820) of capturing a plurality of images of an inside of the cabin (20) at different times by a camera (130);
a step (822) of obtaining data of headcount of passengers (30) in the cabin (20) based on the captured images by a processor (150);
a step (830) of validating the collected headcount data with the obtained data of headcount by the processor (150);
a step (840) of obtaining thermal loads based on the collected headcount data, obtained data of location and density of the passengers (30), calculated humidity and heat generation, obtained solar thermal distribution along the cabin (20), collected HVAC information and collected location and time based weather forecast data by the processor (150).

2. The method (800) of claim 1, further comprising:
a step of (812) of calculating the humidity and heat generation from the passengers (30) based on the collected headcount data by the processor (150).

3. The method (800) of claim 1, further comprising:
a step (850) of obtaining infiltration rates based on duration of opening of doors (22/24) of the vehicle (10) by the processor (150), wherein the obtained infiltration rates are used for calculating the humidity and heat generation.

4. The method (800) of claim 1, further comprising:
a step (860) of capturing a plurality of infrared images of the inside of the cabin (20) at different times by an infrared camera (140);
a step (862) of obtaining solar radiation direction and solar thermal distribution along the cabin (20) based on the captured infrared images by the processor (150).

5. The method (800) of claim 1, further comprising:
a step of (824) of obtaining the data of location and density of passengers (30) in the cabin (20) based on the captured images by the processor (150).

6. The method (800) of claim 1, further comprising:
a step (842) of obtaining optimal temperatures based on the thermal loads.

7. The method (800) of claim 6, further comprising:
a step (844) of setting, by a HVAC controller (160), the optimal temperatures for the HVAC system (110).

8. The method (800) of claim 1, further comprising:
a step (826) of obtaining optimal ventilation rates based on the obtained data of location and density of the passengers (30) by the processor (150), wherein the ventilation rate comprises air speed and air volume.

9. The method (800) of claim 1, wherein the counting system (120) is a tap in/out system (120).

10. A system (100) for controlling a HVAC system (110) in a cabin (20) of a vehicle (10) comprising:
a counting system (120) configured to collect headcount data of passengers (30) in the cabin (20);
a camera (130) configured to capture a plurality of images of an inside of the cabin (20) at different times;
a processor (150) connected to the counting system (120) and the camera (130), wherein the processor (150) is configured to:
obtain data of headcount of passengers (30) in the cabin (20) based on the captured images;
validate the collected headcount data with the obtained data of headcount; and
obtain thermal loads based on the collected headcount data, obtained data of location and density of the passengers (30), calculated humidity and heat generation, obtained solar thermal distribution along the cabin (20), collected HVAC information and collected location and time based weather forecast data.

11. The system (100) of claim 10, further comprising:
an infrared camera (140) configured to capture a plurality of infrared images of the inside of the cabin (20) at different times;
wherein the processor (150) is connected to the infrared camera (140) and is configured to obtain solar radiation direction and solar thermal distribution along the cabin (20) based on the captured infrared images.

12. The system (100) of claim 10, wherein the counting system (120) is a tap in/out system (120).

## Patentansprüche

1. Verfahren (800) zum Steuern eines HVAC-Systems (110) in einer Kabine (20) eines Fahrzeugs (10), Folgendes umfassend:
einen Schritt (810) des Erfassens von Personenanzahldaten von Passagieren (30) in der Kabine (20) durch ein Zählsystem (120);
einen Schritt (820) des Aufnehmens einer Mehrzahl von Bildern eines Inneren der Kabine (20) zu bestimmten Zeitpunkten durch eine Kamera (130);
einen Schritt (822) des Gewinnens von Personenanzahldaten von Passagieren (30) in der Kabine (20), basierend auf den aufgenommenen Bildern, durch einen Prozessor (150);
einen Schritt (830) des Validierens der erfassten Personenanzahldaten mit den gewonnenen Personenanzahldaten durch den Prozessor (150);
einen Schritt (840) des Gewinnens von thermischen Lasten, basierend auf den erfassten Personenanzahldaten, gewonnenen Daten der Position und der Dichte der Passagiere (30), berechneter Luftfeuchte- und Wärmeerzeugung, gewonnener solarthermischer Verteilung in der Kabine (20), erfassten HVAC-Informationen und erfassten positions- und zeitbasierten Wettervorhersagedaten durch den Prozessor (150).

2. Verfahren (800) nach Anspruch 1, das ferner Folgendes umfasst:
einen Schritt (812) des Berechnens der Luftfeuchte- und Wärmeerzeugung seitens der Passagiere (30), basierend auf den erfassten Personenanzahldaten, durch den Prozessor (150).

3. Verfahren (800) nach Anspruch 1, das ferner Folgendes umfasst:
einen Schritt (850) des Gewinnens von Infiltrationsraten, basierend auf einer Dauer des Öffnens der Türen (22/24) des Fahrzeugs (10), durch den Prozessor (150), wobei die gewonnenen Infiltrationsraten zum Berechnen der Luftfeuchte- und Wärmeerzeugung verwendet werden.

4. Verfahren (800) nach Anspruch 1, das ferner Folgendes umfasst:
einen Schritt (860) des Aufnehmens einer Mehrzahl von I)nfrarotbildern des Inneren der Kabine (20) zu bestimmten Zeitpunkten durch eine Infrarotkamera (140);
einen Schritt (862) des Gewinnes der Sonneneinstrahlungsrichtung und der solarthermischen Verteilung entlang der Kabine (20), basierend auf den aufgenommenen Infrarotbildern, durch den Prozessor (150).

5. Verfahren (800) nach Anspruch 1, das ferner Folgendes umfasst:
einen Schritt (824) des Gewinnens der Daten von Position und Dichte der Passagiere (30) in der Kabine (20), basierend auf den aufgenommenen Bildern, durch den Prozessor (150).

6. Verfahren (800) nach Anspruch 1, das ferner Folgendes umfasst:
einen Schritt (842) des Gewinnens optimaler Temperaturen, basierend auf den thermischen Lasten.

7. Verfahren (800) nach Anspruch 6, das ferner Folgendes umfasst:
einen Schritt (844) des Einstellens der optimalen Temperaturen für das HVAC-System (110) durch eine HVAC-Steuerung (160).

8. Verfahren (800) nach Anspruch 1, das ferner Folgendes umfasst:
einen Schritt (826) des Gewinnens optimaler Lüftungsraten, basierend auf den gewonnenen Daten der Position und Dichte der Passagiere (30), durch den Prozessor (150), wobei die Lüftungsrate Luftgeschwindigkeit und Luftvolumen umfasst.

9. Verfahren (800) nach Anspruch 1, wobei das Zählsystem (120) ein Ein-/Ausstiegssystem (120) ist.

10. System (100) zum Steuern eines HVAC-Systems (110) in einer Kabine (20) eines Fahrzeugs (10), das Folgendes umfasst:
ein Zählsystem (120), das konfiguriert ist, Personenanzahldaten von Passagieren (30) in der Kabine (20) zu erfassen;
eine Kamera (130), die konfiguriert ist, eine Mehrzahl von Bildern eines Inneren der Kabine (20) zu verschiedenen Zeitpunkten aufzunehmen;
einen Prozessor (150), der mit dem Zählsystem (120) und der Kamera (130) verbunden ist, wobei der Prozessor (150) zu Folgendem konfiguriert ist:
Gewinnen von Personenanzahldaten von Passagieren (30) in der Kabine (20), basierend auf den aufgenommenen Bildern;
Validieren der erfassten Personenanzahldaten mit den gewonnenen Personenanzahldaten; und
Gewinnen thermischer Lasten, basierend auf den erfassten Personenanzahldaten, gewonnenen Daten der Position und der Dichte der Passagiere (30), berechneter Luftfeuchte- und Wärmeerzeugung, gewonnener solarthermischer Verteilung entlang der Kabine (20), erfassten HVAC-Informationen und erfassten positions- und zeitbasierten Wettervorhersagedaten.

11. System (100) nach Anspruch 10, das Folgendes umfasst:
eine Infrarotkamera (140), die konfiguriert ist, eine Mehrzahl von Infrarotbildern eines Inneren der Kabine (20) zu verschiedenen Zeitpunkten aufzunehmen;
wobei der Prozessor (150) mit der Infrarotkamera (140) verbunden und konfiguriert ist, basierend auf den aufgenommenen Infrarotbildern eine Sonneneinstrahlungsrichtung und eine solarthermische Verteilung in der Kabine (20) zu gewinnen.

12. System (100) nach Anspruch 10, wobei das Zählsystem (120) ein Ein-/Ausstiegssystem (120) ist.

## Revendications

1. Procédé (800) de commande d'un système HVAC (110) dans un habitacle (20) d'un véhicule (10), comprenant :
une étape (810) de collecte de données de comptage de passagers (30) dans l'habitacle (20) par un système de comptage (120) ;
une étape (820) de capture d'une pluralité d'images d'un intérieur de l'habitacle (20) à différents moments par une caméra (130) ;
une étape (822) d'obtention de données de comptage de passagers (30) dans l'habitacle (20) sur la base des images capturées par un processeur (150) ;
une étape (830) de validation des données de comptage collectées avec les données de comptage obtenues par le processeur (150) ;
une étape (840) d'obtention de charges thermiques sur la base des données de comptage collectées, de données d'emplacement et de densité des passagers (30) obtenues, d'une génération d'humidité et de chaleur calculée, d'une répartition thermique solaire le long de l'habitacle (20) obtenue, d'informations HVAC collectées et de données d'emplacement et de prévisions météorologiques temporelles collectées par le processeur (150).

2. Procédé (800) selon la revendication 1, comprenant en outre :
une étape (812) de calcul de la génération d'humidité et de chaleur par les passagers (30) sur la base des données de comptage collectées par le processeur (150).

3. Procédé (800) selon la revendication 1, comprenant en outre :
une étape (850) d'obtention de taux d'infiltration sur la base de la durée d'ouverture de portes (22/24) du véhicule (10) par le processeur (150), dans lequel les taux d'infiltration obtenus sont utilisés pour calculer la génération d'humidité et de chaleur.

4. Procédé (800) selon la revendication 1, comprenant en outre :
une étape (860) de capture d'une pluralité d'images infrarouges de l'intérieur de l'habitacle (20) à différents moments par une caméra infrarouge (140) ;
une étape (862) d'obtention de direction de rayonnement solaire et de répartition thermique solaire le long de l'habitacle (20) sur la base des images infrarouges capturées par le processeur (150).

5. Procédé (800) selon la revendication 1, comprenant en outre :
une étape (824) d'obtention des données d'emplacement et de densité de passagers (30) dans l'habitacle (20) sur la base des images capturées par le processeur (150).

6. Procédé (800) selon la revendication 1, comprenant en outre :
une étape (842) d'obtention de températures optimales sur la base des charges thermiques.

7. Procédé (800) selon la revendication 6, comprenant en outre :
une étape (844) de réglage, par un dispositif de commande HVAC (160), des températures optimales pour le système HVAC (110).

8. Procédé (800) selon la revendication 1, comprenant en outre :
une étape (826) d'obtention de taux de ventilation optimaux sur la base des données d'emplacement et de densité des passagers (30) obtenues par le processeur (150), dans lequel le taux de ventilation comprend une vitesse d'air et un volume d'air.

9. Procédé (800) selon la revendication 1, dans lequel le système de comptage (120) est un système d'enregistrement d'entrée/sortie (120).

10. Système (100) de commande d'un système HVAC (110) dans un habitacle (20) d'un véhicule (10), comprenant :
un système de comptage (120) configuré pour collecter des données de comptage de passagers (30) dans l'habitacle (20) ;
une caméra (130) configurée pour capturer une pluralité d'images d'un intérieur de l'habitacle (20) à différents moments ;
un processeur (150) connecté au système de comptage (120) et à la caméra (130), dans lequel le processeur (150) est configuré pour :
obtenir des données de comptage de passagers (30) dans l'habitacle (20) sur la base des images capturées ;
valider les données de comptage collectées avec les données de comptage obtenues ; et
obtenir des charges thermiques sur la base des données de comptage collectées, de données d'emplacement et de densité des passagers (30) obtenues, d'une génération d'humidité et de chaleur calculée, d'une répartition thermique solaire le long de l'habitacle (20) obtenue, d'informations HVAC collectées et de données d'emplacement et de prévisions météorologiques temporelles collectées.

11. Système (100) selon la revendication 10, comprenant en outre :
une caméra infrarouge (140) configurée pour capturer une pluralité d'images infrarouges de l'intérieur de l'habitacle (20) à différents moments ;
dans lequel le processeur (150) est connecté à la caméra infrarouge (140) et est configuré pour obtenir une direction de rayonnement solaire et une répartition thermique solaire le long de l'habitacle (20) sur la base des images infrarouges capturées.

12. Système (100) selon la revendication 10, dans lequel le système de comptage (120) est un système d'enregistrement d'entrée/sortie (120).
